# EUROPEAN PATENT APPLICATION

(11) **EP 4 832 183 A1**
(43) Date of publication of application: **28.10.2026**
(21) Application number: 24907078.0
(22) Date of filing: 25.11.2024
(51) Int. Cl.: H01M 50/186, H01M 10/052, H01M 10/0566, H01M 50/19, H01M 50/107, H01M 50/167, H01M 50/184

(54) **NON-AQUEOUS ELECTROLYTE SECONDARY BATTERY**

(30) Priority: 21.12.2023 JP 2023215787
(71) Applicant: Panasonic Intellectual Property Management Co., Ltd., Kadoma-shi, Osaka 571-0057 (JP)
(72) Inventor: YAMAGUCHI, Yuma, Osaka 571-0057 (JP)
(74) Representative: Eisenführ Speiser
(86) International application number: PCT/JP2024/041558
(87) International publication number: WO 2025/134690

(57) **Abstract**

This non-aqueous electrolyte secondary battery (10) comprises an electrode body, a non-aqueous electrolyte, a cylindrical outer can (20) with a bottom that accommodates the electrode body and the non-aqueous electrolyte, a sealing body (30) closing an opening (24) of the outer can (20), an annular gasket (34) disposed between the outer can (20) and the sealing body (30), and a protective member (40) disposed between the outer can (20) and the gasket (34), and is characterized in that: the outer can (20) has a crimping portion (26) that extends radially inward and fixes the sealing body by crimping; and the protective member (40) has an exposed portion (41) disposed radially inward of a radial inner end (26A) of the crimping portion (26).

## Description

### TECHNICAL FIELD

The present disclosure relates to a non-aqueous electrolyte secondary battery.

### BACKGROUND ART

Conventionally, a non-aqueous electrolyte secondary battery comprising a housing can with a bottomed cylindrical shape that accommodates an electrode assembly and a non-aqueous electrolytic solution and a sealing assembly that closes an opening portion of the housing can is known. The inside of the non-aqueous electrolyte secondary battery is tightly closed by crimping and fixing the sealing assembly between an annular grooved portion formed on a side surface portion of the housing can and an opening end portion of the housing can. PATENT LITERATURE 1 discloses a non-aqueous electrolyte secondary battery comprising a sealing agent that contains a soft polymer and an imidazole compound for the purpose of improving sealing of the non-aqueous electrolyte secondary battery and reducing leakage of a non-aqueous electrolytic solution.

### CITATION LIST

### PATENT LITERATURE

PATENT LITERATURE 1: Japanese Unexamined Patent Application Publication No. 2011-014371

### SUMMARY

Incidentally, it is difficult to completely reduce leakage of a non-aqueous electrolytic solution even in a case where sealing of a non-aqueous electrolyte secondary battery is improved. Once leakage of the non-aqueous electrolytic solution occurs, the non-aqueous electrolytic solution may come into contact with a housing can, and the housing can may rust. Therefore, reducing rusting of the housing can is an important issue in a case where leakage of the non-aqueous electrolytic solution occurs.

A non-aqueous electrolyte secondary battery according to an aspect of the present invention is a non-aqueous electrolyte secondary battery comprising: an electrode assembly that includes a positive electrode and a negative electrode; a non-aqueous electrolytic solution; a housing can with a bottomed cylindrical shape that accommodates the electrode assembly and the non-aqueous electrolytic solution; a sealing assembly that closes an opening portion of the housing can; an annular gasket that is disposed between the housing can and the sealing assembly; and a protective member that is disposed between the housing can and the gasket, wherein the housing can has a crimped portion that extends inward in a radial direction and crimps and fixes the sealing assembly, and the protective member has an exposed portion that is disposed on a side further inward in the radial direction than a radially inner end of the crimped portion.

The non-aqueous electrolyte secondary battery according to an aspect of the present disclosure can reduce rusting of the housing can even in a case where leakage of the non-aqueous electrolytic solution occurs.

### BRIEF DESCRIPTION OF DRAWINGS

FIG. 1 is an axial sectional view of a non-aqueous electrolyte secondary battery according to an example of an embodiment.
FIG. 2 is a view illustrating the vicinity of an opening portion in FIG. 1 in an enlarged manner.
FIG. 3 is a view schematically illustrating a flow of a non-aqueous electrolytic solution in FIG. 2.
FIG. 4 is an axial sectional view of a non-aqueous electrolyte secondary battery according to another example of the embodiment, which is a view illustrating the vicinity of an opening portion in an enlarged manner.

### DESCRIPTION OF EMBODIMENTS

Hereinafter, an example of an embodiment of a non-aqueous electrolyte secondary battery according to the present disclosure will be described in detail with reference to the drawings. The embodiment described below is just an example, and the present disclosure is not limited to the following embodiment. Also, modes achieved by selectively combining components of the embodiment described below are also included in the present disclosure.

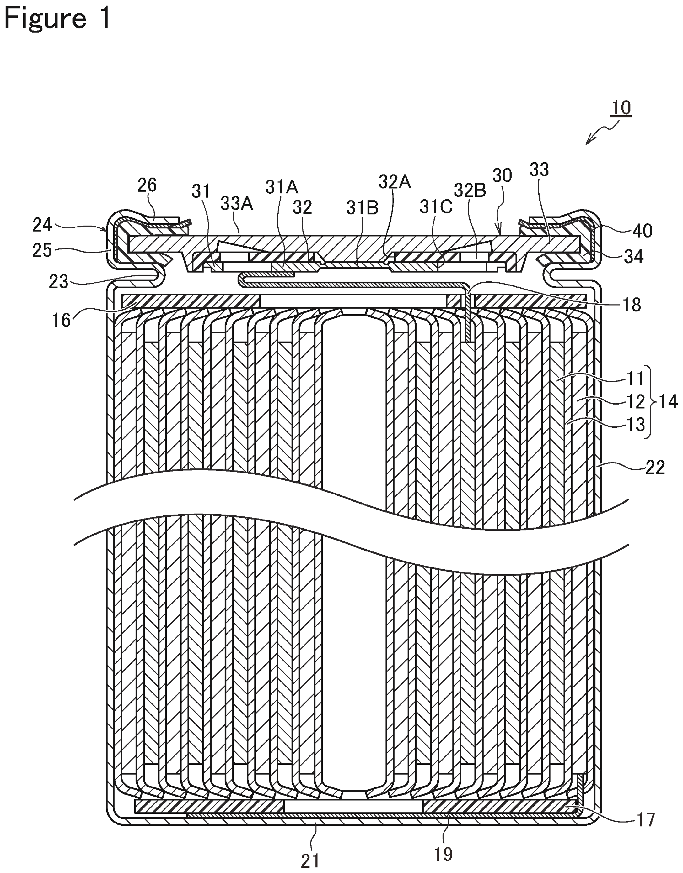

FIG. 1 is an axial sectional view of a non-aqueous electrolyte secondary battery 10 according to an example of the embodiment. As illustrated in FIG. 1, the non-aqueous electrolyte secondary battery 10 comprises an electrode assembly 14, a non-aqueous electrolytic solution (not illustrated), and a housing can 20 that accommodates the electrode assembly 14 and the non-aqueous electrolytic solution. The housing can 20 is a metal container with a bottomed cylindrical shape opened on one side in the axial direction, and an opening portion 24 of the housing can 20 is closed by a sealing assembly 30. Hereinafter, a sealing assembly 30 side in the axial direction (height direction) of the non-aqueous electrolyte secondary battery 10 will be defined as an "upper side", while a bottom 21 side of the housing can 20 in the axial direction will be defined as a "lower side".

The electrode assembly 14 includes a positive electrode 11, a negative electrode 12, and a separator 13 and has a structure in which the positive electrode 11 and the negative electrode 12 are wound in a spiral shape with the separator 13 interposed therebetween. All of the positive electrode 11, the negative electrode 12, and the separator 13 have strip-shaped elongated bodies and are alternately stacked in the radial direction of the electrode assembly 14 by being wound in a spiral shape. The negative electrode 12 is formed to have a slightly larger dimension than the positive electrode 11 to prevent lithium precipitation. In other words, the negative electrode 12 is formed to be longer in the long-side direction and the width direction (short-side direction) than the positive electrode 11. The separator 13 is formed to have a slightly larger dimension at least than the positive electrode 11, and two separators 13 are disposed to sandwich the positive electrode 11. The non-aqueous electrolyte secondary battery 10 comprises insulating plates 16 and 17 disposed on the upper and lower sides of the electrode assembly 14, respectively.

The positive electrode 11 has a positive electrode core and positive electrode mixture layers formed on the positive electrode core. For the positive electrode core, it is possible to use a metal foil that is stable within a potential range of the positive electrode 11 such as aluminum or an aluminum alloy, a film with such metal disposed on a surface layer, or the like. The positive electrode mixture layers include a positive electrode active material, a conductive agent, and a binder and are preferably formed on both surfaces of the positive electrode core except for a positive electrode core exposed portion to which a positive electrode lead 18 is welded. The positive electrode 11 can be produced by applying a positive electrode mixture slurry including the positive electrode active material, the conductive agent, the binder, and the like on the positive electrode core, drying the coating film, and then compressing it to form the positive electrode mixture layers on both surfaces of the positive electrode core, for example.

The positive electrode mixture layer includes a particulate lithium metal complex oxide as the positive electrode active material. The lithium metal complex oxide is a complex oxide containing a metal element such as Co, Mn, Ni, or Al in addition to Li. The metal element constituting the lithium metal complex oxide is, for example, at least one of the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, it is preferable to contain at least one of the group consisting of Co, Ni, and Mn. Suitable examples of the complex oxide include lithium metal complex oxide containing Ni, Co, and Mn and a lithium metal complex oxide containing Ni, Co, and Al.

Examples of the conductive agent included in the positive electrode mixture layers include carbon black such as acetylene black and Ketjenblack and carbon materials such as graphite, carbon nanotube (CNT), carbon nanofiber, and graphene. Examples of the binder included in the positive electrode mixture layers include fluorine-containing resins such as polytetrafluoroethylene (PTFE) and polyvinylidene fluoride (PVDF), polyacrylonitrile (PAN), polyimide, an acrylic resin, and polyolefin. Also, these resins and carboxymethyl cellulose (CMC) or a salt thereof, polyethylene oxide (PEO), or the like may be used together.

The negative electrode 12 has a negative electrode core and negative electrode mixture layers formed on the negative electrode core. For the negative electrode core, it is possible to use a metal foil that is stable within a potential range of the negative electrode 12 such as copper or a copper alloy, a film with such metal disposed on a surface layer, or the like. The negative electrode mixture layers include a negative electrode active material, a binder, and a conductive agent as needed and are preferably formed on both surfaces of the negative electrode core except for a negative electrode core exposed portion to which a negative electrode lead 19 is welded. The negative electrode 12 can be produced by applying a negative electrode mixture slurry including the negative electrode active material, the binder, and the like to the surface of the negative electrode core, drying the coating film, and then compressing it to form the negative electrode mixture layers on both surfaces of the negative electrode core.

The negative electrode mixture layers generally include a carbon material that reversibly occludes and discharges lithium ions as the negative electrode active material. Suitable examples of the carbon material include graphite such as natural graphite including flake graphite, lump graphite, and amorphous graphite and artificial graphite such as massive artificial graphite (MAG), and graphitized mesophase carbon microbeads (MCMB). As the negative electrode active material, a material including at least one of an element alloyed with Li, such as Si or Sn, and a material containing such an element may be used. Among these, a composite material containing Si is preferably adopted.

Suitable examples of the composite material containing Si include a material with Si fine particles dispersed in an SiO₂ phase or a silicate phase of lithium silicate or the like and a material with Si fine particles dispersed in an amorphous carbon phase. A conductive layer such as a carbon coating film, for example, is formed on the particle surfaces of the composite material.

Although it is also possible to use a fluorine-containing resin, PAN, polyimide, an acrylic resin, polyolefin, or the like as the binder included in the negative electrode mixture layers similarly to the case of the positive electrode mixture layers, styrene-butadiene rubber (SBR) is preferably used. Also, the negative electrode mixture layers preferably include CMC or a salt thereof, a polyacrylic acid (PAA) or a salt thereof, polyvinyl alcohol (PVA), or the like. Among these, SBR is suitably used together with CMC or a salt thereof, PAA or a salt thereof, or the like. The negative electrode mixture layers may include a conductive agent such as CNT.

For the separator 13, porous sheets with ion permeability and insulation are used. Specific examples of the porous sheets include microporous thin films, woven fabric, and non-woven fabric. As a material of the separator 13, polyolefin such as polyethylene or polypropylene, cellulose, or the like is suitably used. The separator 13 may have a single-layer structure or may have a multi-layer structure. Also, resin layers with high heat resistance such as an aramid resin may be formed on the surfaces of the separator 13. A filler layer including an inorganic filler may be formed on an interface between the separator 13 and at least one of the positive electrode 11 and the negative electrode 12.

The positive electrode lead 18 is connected to the positive electrode 11, and the negative electrode lead 19 is connected on the winding end side of the negative electrode 12. The positive electrode lead 18 extends on the sealing assembly 30 side through a through-hole in the insulating plate 16, and the negative electrode lead 19 extends on the bottom 21 side of the housing can 20 through the outside of the insulating plate 17. The positive electrode lead 18 is connected to a lower surface of an inner terminal board 31 of the sealing assembly 30 through welding or the like, and the sealing assembly 30 serves as a positive electrode terminal. Also, the negative electrode lead 19 is connected to an inner surface of the bottom 21 of the housing can 20 made of metal through welding or the like, and the housing can 20 serves as a negative electrode terminal.

It is possible to use carbonates, lactones, ethers, ketones, esters, and the like as a non-aqueous solvent (organic solvent) of the non-aqueous electrolytic solution to be accommodated in the housing can 20, and two or more kinds from these solvents can be used in a mixed manner. In the case where two or more kinds of solvents are used in a mixed manner, a mixed solvent including cyclic carbonate and chain carbonate is preferably used. For example, it is possible to use ethylene carbonate (EC), propylene carbonate (PC), butylene carbonate (BC), or the like as the cyclic carbonate, and it is possible to use dimethyl carbonate (DMC), ethyl methyl carbonate (EMC), diethyl carbonate (DEC), or the like as the chain carbonate. As an electrolyte salt of the non-aqueous electrolytic solution, it is possible to use LiPF₆, LiBF₄, LiCF₃SO₃, or the like or a mixture thereof. The amount of electrolyte salt to be dissolved in the non-aqueous solvent can be greater than or equal to 0.5 mol/L and less than or equal to 2.0 mol/L, for example.

The housing can 20 is a metal container with a bottomed cylindrical shape opened on one side in the axial direction. The housing can 20 has the bottom 21 and a side surface portion 22 forming a side surface of the non-aqueous electrolyte secondary battery 10. The side surface portion 22 is a part of the housing can 20 except for the bottom 21 and includes a grooved portion 23 and an opening portion 24, which will be described later.

The grooved portion 23 is a part of the side surface portion 22 recessed inward in the radial direction and is provided in an annular shape along the circumferential direction of the housing can 20. The grooved portion 23 supports, with its upper surface, the sealing assembly 30. The grooved portion 23 can be formed by performing spinning processing on a part of the side surface portion 22 inward in the radial direction to dent the part in an annular shape inward in the radial direction, for example.

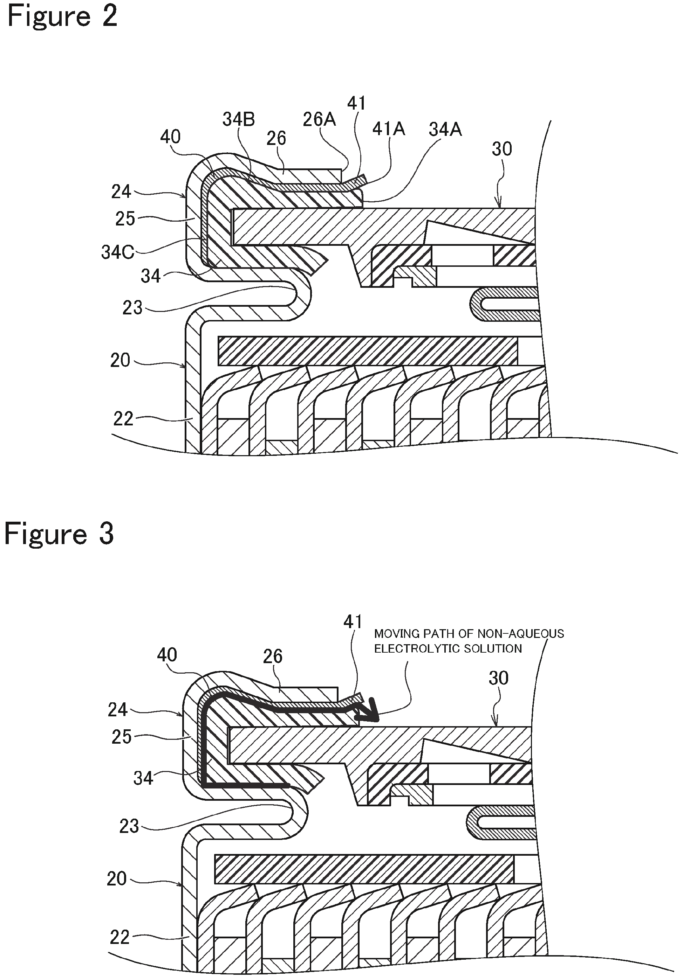

The opening portion 24 is a region of the side surface portion 22 on a side further upward than the grooved portion 23 and forms the opening of the housing can 20. The opening portion 24 is folded inward in the radial direction when the sealing assembly 30 is crimped and fixed to the housing can 20. In this manner, an opening side surface portion 25 that forms a part of the side surface of the non-aqueous electrolyte secondary battery 10 and covers the outer peripheral surface of a gasket 34 and a crimped portion 26 that forms a part of the upper surface of the non-aqueous electrolyte secondary battery 10 and extends inward in the radial direction are formed in the opening portion 24. Moreover, a radially inner end 26A (see FIG. 2) of the crimped portion 26 is located on the side further outward in the radial direction than a radially inner end 34A (see FIG. 2) of the gasket 34. In other words, a part of the upper surface of the gasket 34 is not covered with the crimped portion 26. Although details will be described later, a protective tape 40 as a protective member is disposed between the opening portion 24 of the housing can 20 and the gasket 34.

The sealing assembly 30 is a disk-shaped member that comprises a safety valve. The sealing assembly 30 has a structure in which the inner terminal board 31, an insulating member 32, and an outer terminal board 33 are stacked in this order from the electrode assembly 14 side.

The inner terminal board 31 is a metal plate including a thick portion 31A with an increased thickness to which the positive electrode lead 18 is connected and a center portion 31B with a reduced thickness that is disconnected from the thick portion 31A when the internal pressure of the battery exceeds a predetermined threshold value. A plurality of ventilation holes 31C are formed in the thick portion 31A.

The insulating member 32 insulates a part other than the connected part between the inner terminal board 31 and the outer terminal board 33. An opening portion 32A is formed at the center portion of the insulating member 32 in the radial direction, and ventilation holes 32B are formed at parts overlapping the ventilation holes 31C of the inner terminal board 31.

The outer terminal board 33 forms a part of the upper surface of the non-aqueous electrolyte secondary battery 10 and is disposed to face the inner terminal board 31 with the insulating member 32 sandwiched therebetween. The outer terminal board 33 has a thin portion 33A that ruptures when the internal pressure of the non-aqueous electrolyte secondary battery 10 exceeds the predetermined threshold value. The outer terminal board 33 is connected, at its center portion in the radial direction, to the center portion 31B of the inner terminal board 31 through welding or the like. Also, the outer side of the outer terminal board 33 in the radial direction is sandwiched between the crimped portion 26 formed by bending the opening of the housing can 20 inward and the grooved portion 23 via the gasket 34.

If abnormality occurs in the non-aqueous electrolyte secondary battery 10, and the internal pressure rises, then generated high-temperature gas pushes up the inner terminal board 31, the inner terminal board 31 ruptures, the center portion 31B is disconnected from the thick portion 31A, and the outer terminal board 33 is deformed to project toward the outside of the battery. In this manner, a current path in the sealing assembly 30 is interrupted. Then, if the internal pressure of the non-aqueous electrolyte secondary battery 10 further rises after the current path is interrupted, the thin portion 33A of the outer terminal board 33 ruptures, and a gas outlet port is formed in the outer terminal board 33.

Note that the structure of the sealing assembly 30 is not limited to the structure illustrated in FIG. 1. The sealing assembly 30 may have a projecting cap that covers the outer terminal board 33, for example.

The gasket 34 is an insulating member with flexibility, electrically insulates the sealing assembly 30 which is a positive electrode terminal from the housing can 20 which is a negative electrode terminal, and secures sealing of the inside of the housing can 20 by being compressed in the up-down direction. A material of the gasket 34 is not particularly limited as long as the material is a compressible insulating material, and for example, it is possible to use polypropylene (PP), polyphenylene sulfide (PPS), polyethylene (PE), polybutylene terephthalate (PBT), perfluoroalkoxy alkane (PFA), polytetrafluoroethylene (PTFE), polyamide (PA), or the like.

Next, a tightly closed state of the opening portion 24 of the non-aqueous electrolyte secondary battery 10 and the protective tape 40 as a protective member will be described with reference to FIGS. 2 and 3. FIG. 2 is an enlarged view of the vicinity of the opening portion 24, and FIG. 3 is a view schematically illustrating a movement path of the non-aqueous electrolytic solution in FIG. 2.

As illustrated in FIG. 2, the protective tape 40 as a protective member is disposed between the opening portion 24 of the housing can 20 and the gasket 34. Specifically, the protective tape 40 is disposed between the opening portion 24 and an upper surface 34B and a side surface 34C of the gasket 34. The protective tape 40 is attached to the inner surface of the opening portion 24.

Here, the protective tape 40 has an exposed portion 41 that is disposed on the side further inward in the radial direction than the radially inner end 26A of the crimped portion 26. In other words, the exposed portion 41 is not covered with the crimped portion 26 and is disposed in a state where the upper surface thereof is exposed.

As illustrated in FIG. 3, the non-aqueous electrolytic solution inside the housing can 20 may enter the interface between the protective tape 40 and the gasket 34 due to impact or the like from the outside of the battery. Then, the entering non-aqueous electrolytic solution may move to the upper portion of the battery along the gap between the protective tape 40 and the gasket 34 and may leak to the outside of the battery. At this time, movement of the non-aqueous electrolytic solution, which has leaked to the outside of the battery, to the crimped portion 26 side is inhibited by the protective tape 40 having the exposed portion 41. As a result, it is possible to reduce rusting of the housing can 20 due to the crimped portion 26 coming into contact with the non-aqueous electrolytic solution. In other words, in a case where the protective tape 40 does not have the exposed portion 41, the non-aqueous electrolytic solution that has leaked to the outside of the battery from the interface between the protective tape 40 and the gasket 34 comes into contact with the crimped portion 26 and leads to rusting of the housing can 20. Rusting of the housing can 20 leads not only a visual defect but also a concern of degradation of battery performance, which is unfavorable.

As illustrated in FIG. 2, a radially inner end 41A of the exposed portion 41 is preferably disposed on the side further inward in the radial direction than the radially inner end 34A of the gasket 34. In other words, the upper surface 34B of the gasket 34 is preferably covered with the protective tape 40. In this case, the non-aqueous electrolytic solution that has leaked to the outside of the battery from the interface between the protective tape 40 and the gasket 34 is likely to flow to the center portion side of the battery. As a result, contact of the leaking non-aqueous electrolytic solution with the crimped portion 26 is further reduced.

The length of the exposed portion 41 in the radial direction is preferably greater than or equal to 0.10 mm, is more preferably greater than or equal to 0.15 mm, and is further preferably greater than or equal to 0.20 mm. Here, the length of the exposed portion 41 in the radial direction means a length along the radial direction of the housing can 20 from the radially inner end 26A of the crimped portion 26 to the radially inner end 41A of the exposed portion 41. It is possible to further reduce contact of the non-aqueous electrolytic solution that has leaked from the interface between the protective tape 40 and the gasket 34 to the outside of the battery with the crimped portion 26 by setting the length of the exposed portion 41 in the radial direction to be greater than or equal to 0.10 mm. Although an upper limit of the length of the exposed portion 41 in the radial direction is not particularly limited, the upper limit is, for example, 2.0 mm. Note that in a case where the protective tape 40 has electrical conductivity, it is necessary to dispose the protective tape 40 so as not to come into contact with the sealing assembly 30.

The exposed portion 41 is preferably provided over the entire periphery in the circumferential direction of the housing can 20. In this case, it is possible to reduce contact of the leaking non-aqueous electrolytic solution with the crimped portion 26 over the entire periphery in the circumferential direction of the housing can 20.

The protective tape 40 has, for example, a base material portion and an adhesive portion formed on one surface of the base material portion. The base material portion may be formed of an insulating resin material or may be formed of a conductive metal material. It is possible to extend the distance between the sealing assembly 30 and the housing can 20 by the thickness of the protective tape 40 by providing the protective tape 40. Therefore, it becomes easy to secure insulation between the sealing assembly 30 and the housing can 20 by forming the base material portion from an insulating material. Also, it is possible to achieve insulation between the sealing assembly 30 and the housing can 20 with the protective tape 40 when the gasket 34 is melted at the time of abnormal heat generation of the battery due to external short circuit, by forming the base material portion from the insulating material. The thickness of the base material portion is, for example, greater than or equal to 5 µm and less than or equal to 50 µm, and is preferably greater than or equal to 5 µm and less than or equal to 30 µm.

As the insulating resin material constituting the base material portion, it is possible to use, for example, polyimide (PI), polypropylene (PP), polyphenylene sulfide (PPS), polyether ether ketone (PEEK), polyethylene terephthalate (PET), polybutylene terephthalate (PBT), or the like. Among these, polyimide (PI) is preferably used from the viewpoint of securing heat resistance of the protective tape 40.

The adhesive portion is a part for causing the protective tape 40 to adhere to the inner surface of the housing can 20. The thickness of the adhesive portion is, for example, greater than or equal to 1 µm and less than or equal to 30 µm, and is preferably greater than or equal to 2 µm and less than or equal to 25 µm. The adhesive portion includes at least one of a rubber-based polymer, an acrylic polymer, and a silicon-based polymer, for example. Since the rubber-based polymer, the acrylic polymer, and the silicon-based polymer have adhesiveness, it is possible to cause the protective tape 40 to adhere to the inner surface of the housing can 20.

Next, an example of a method of manufacturing the non-aqueous electrolyte secondary battery comprising the protective tape 40 will be described. First, the protective tape 40 is attached to the inner surface of the opening portion 24 of the housing can 20. At this time, the protective tape 40 is preferably attached over the entire periphery of the opening portion 24. Next, the electrode assembly 14 is accommodated in the housing can 20, the negative electrode lead 19 is welded to the bottom 21 of the housing can 20, and the grooved portion 23 is formed through pressing on the side surface portion 22 of the housing can 20, in a state where the insulating plates 16 and 17 are disposed on the upper and lower sides of the electrode assembly 14, respectively. Next, an appropriate amount of non-aqueous electrolytic solution is poured into the housing can 20, and the gasket 34 is accommodated at the upper portion of the grooved portion 23. Then, the sealing assembly 30 is welded to the positive electrode lead 18, and the sealing assembly 30 is crimped and fixed between the grooved portion 23 and the opening portion 24 via the gasket 34, thereby producing the non-aqueous electrolyte secondary battery 10 comprising the protective tape 40.

As described above, movement of the non-aqueous electrolytic solution that has leaked to the outside of the battery to the crimped portion 26 side is reduced by disposing the protective tape 40 as a protective member having the exposed portion 41 between the opening portion 24 of the housing can 20 and the gasket 34. As a result, it is possible to reduce rusting of the housing can 20 due to contact of the crimped portion 26 with the non-aqueous electrolytic solution.

Also, it becomes easy to improve sealing of the inside of the battery by providing the protective member between the opening portion 24 of the housing can 20 and the gasket 34. Moreover, it is possible to decrease heat damage on the gasket 34 and the sealing assembly 30 when welding or the like is performed on the crimped portion 26 in the process of manufacturing the battery, for example, by providing the protective member between the opening portion 24 of the housing can 20 and the gasket 34.

Note that the above-described embodiment can be appropriately changed without defeating the object of the present disclosure. Although the protective member is a tape attached to the opening portion 24 in the above-described embodiment, for example, the configuration of the protective member is not limited thereto. For example, the protective member may be a sheet-shaped member with no adhesiveness.

Also, although the protective tape 40 is disposed between the opening portion 24 of the gasket 34 and the upper surface 34B and the side surface 34C of the gasket 34 in the above-described embodiment, the arrangement of the protective tape 40 is not limited thereto. The protective tape 40 may be disposed only between the opening portion 24 and the upper surface 34B of the gasket 34 and may not be disposed between the opening portion 24 and the side surface 34C of the gasket 34, for example.

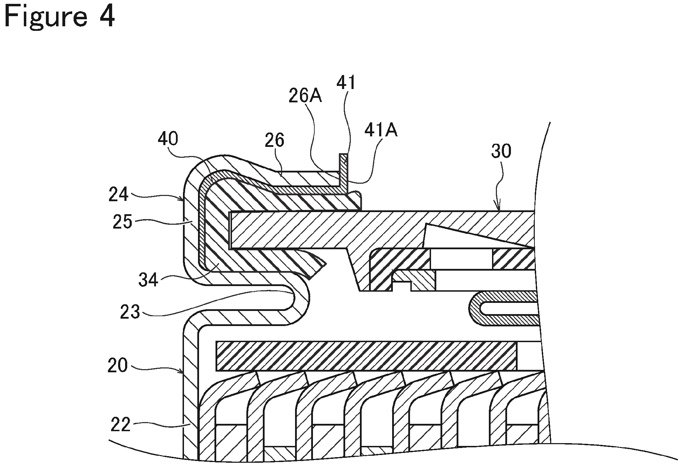

Also, although the exposed portion 41 extends along the upper surface 34B of the gasket 34 in the above-described embodiment, the present disclosure is not limited thereto. For example, the exposed portion 41 may extend upward and may be disposed to cover the radially inner end 26A of the crimped portion 26 as illustrated in FIG. 4. In this case, it is possible to reduce contact of the leaking non-aqueous electrolytic solution with the radially inner end 26A of the crimped portion 26.

Moreover, a sealing agent for improving sealing of the housing can 20 may be disposed, in addition to the protective member, between the opening portion 24 of the housing can 20 and the gasket 34. As a material of the sealing agent, it is possible to use a material that is conventionally used as a sealing agent, and it is possible to use, for example, a rubber-based polymer, pitch, asphalt, or a vinyl-based, silicon-based, acrylic, urethane-based, or fluorine-based polymer. The sealing agent can be produced by applying a coating solution including the above-described material to the surface of the protective tape 40 attached to the inner surface of the housing can 20, for example. In other words, the sealing agent is interposed between the protective tape 40 and the gasket 34.

The present disclosure is further described by the following embodiments.

### Configuration 1:

A non-aqueous electrolyte secondary battery comprising: an electrode assembly that includes a positive electrode and a negative electrode; a non-aqueous electrolytic solution; a housing can with a bottomed cylindrical shape that accommodates the electrode assembly and the non-aqueous electrolytic solution; a sealing assembly that closes an opening portion of the housing can; an annular gasket that is disposed between the housing can and the sealing assembly; and a protective member that is disposed between the housing can and the gasket, wherein the housing can has a crimped portion that extends inward in a radial direction and crimps and fixes the sealing assembly, and the protective member has an exposed portion that is disposed on a side further inward in the radial direction than a radially inner end of the crimped portion.

### Configuration 2:

The non-aqueous electrolyte secondary battery according to Configuration 1, wherein a radially inner end of the exposed portion is disposed on a side further inward in the radial direction than a radially inner end of the gasket.

### Configuration 3:

The non-aqueous electrolyte secondary battery according to Configuration 1 or 2, wherein a length of the exposed portion in the radial direction is greater than or equal to 0.10 mm.

### Configuration 4:

The non-aqueous electrolyte secondary battery according to any one of Configurations 1 to 3, wherein the exposed portion is provided over an entire periphery in a circumferential direction of the housing can.

### Configuration 5:

The non-aqueous electrolyte secondary battery according to any one of Configurations 1 to 4, wherein the protective member is a tape and is attached to an inner surface of the housing can.

### Configuration 6:

The non-aqueous electrolyte secondary battery according to any one of Configurations 1 to 5, wherein the protective member has insulating properties.

### REFERENCE SIGNS LIST

10 Non-aqueous electrolyte secondary battery, 11 Positive electrode, 12 Negative electrode, 13 Separator, 14 Electrode assembly, 16, 17 Insulating plate, 18 Positive electrode lead, 19 Negative electrode lead, 20 Housing can, 21 Bottom, 22 Side surface portion, 23 Grooved portion, 24 Opening portion, 25 Opening side surface portion, 26 Crimped portion, 26A Radially inner end, 30 Sealing assembly, 31 Inner terminal board, 31A Thick portion, 31B Center portion, 31C Ventilation hole, 32 Insulating member, 32A Opening portion, 32B Ventilation hole, 33 Outer terminal board, 33A Thin portion, 34 Gasket, 34A Radially inner end, 34B Upper surface, 34C Side surface, 40 Protective tape, 41 Exposed portion, 41A Radially inner end

## Claims

1. A non-aqueous electrolyte secondary battery comprising:
an electrode assembly that includes a positive electrode and a negative electrode;
a non-aqueous electrolytic solution;
a housing can with a bottomed cylindrical shape that accommodates the electrode assembly and the non-aqueous electrolytic solution;
a sealing assembly that closes an opening portion of the housing can;
an annular gasket that is disposed between the housing can and the sealing assembly; and
a protective member that is disposed between the housing can and the gasket, wherein
the housing can has a crimped portion that extends inward in a radial direction and crimps and fixes the sealing assembly, and
the protective member has an exposed portion that is disposed on a side further inward in the radial direction than a radially inner end of the crimped portion.

2. The non-aqueous electrolyte secondary battery according to claim 1, wherein a radially inner end of the exposed portion is disposed on a side further inward in the radial direction than a radially inner end of the gasket.

3. The non-aqueous electrolyte secondary battery according to claim 1, wherein a length of the exposed portion in the radial direction is greater than or equal to 0.10 mm.

4. The non-aqueous electrolyte secondary battery according to claim 1, wherein the exposed portion is provided over an entire periphery in a circumferential direction of the housing can.

5. The non-aqueous electrolyte secondary battery according to claim 1, wherein the protective member is a tape and is attached to an inner surface of the housing can.

6. The non-aqueous electrolyte secondary battery according to claim 1, wherein the protective member has insulating properties.
